Europäisches Patentamt

European Patent Office

Office européen des brevets

(19)

(11) Numéro de publication: **0 112 256**

**A2**

(12) **DEMANDE DE BREVET EUROPEEN**

(21) Numéro de dépôt: **83402436.6**

(22) Date de dépôt: **15.12.83**

(51) Int. Cl.³: **G 06 K 7/10**

(30) Priorité: **20.12.82 FR 8221351**

(43) Date de publication de la demande:
**27.06.84 Bulletin 84/26**

(84) Etats contractants désignés:
**AT DE GB IT NL SE**

(71) Demandeur: **INSTITUT DE RECHERCHES DE LA SIDERURGIE FRANCAISE (IRSID)**
**185, rue Président Roosevelt**
**F-78105 Saint Germain-en-Laye Cédex(FR)**

(72) Inventeur: **Juret, Thierry**
**125, rue de Vallières**
**F-57070 Metz(FR)**

(72) Inventeur: **Grein, Frédéric**
**8, rue Bellevue**
**F-57110 Illange(FR)**

(72) Inventeur: **Tourscher, Gérard**
**6bis, rue de Fêves**
**F-57140 Norroy-le-Veneur(FR)**

(74) Mandataire: **Ventavoli, Roger et al,**
**INSTITUT DE RECHERCHES DE LA SIDERURGIE FRANCAISE (IRSID) 185, rue Président Roosevelt**
**F-78105 Saint-Germain-en-Laye(FR)**

(54) Procédé d'identification de produits métallurgiques et dispositif de mise en oeuvre.

(57) On effectue, dans un premier temps, un marquage en relief sur une surface du produit, et on effectue, dans un deuxième temps, une lecture sans contact du marquage :

- a) en émettant un plan lumineux (8a) obtenu par balayage laser dont l'intersection avec la surface marquée du produit se matérialise par une trace lumineuse (8b) croisant les reliefs de marquage (3),

- b) et en visant la zone marquée par des moyens optiques (9) sensibles à la lumière constitutive du plan luminuex et dont l'axe optique (11) est en dehors dudit plan, de manière à pouvoir mettre en évidence les décrochements de la trace lumineuse (8b) sur les reliefs de marquage (3) et permettre ainsi la lecture de celui-ci.

Fig.1

# PROCEDE D'IDENTIFICATION DE PRODUITS METALLURGIQUES
## ET DISPOSITIF DE MISE EN OEUVRE

L'invention concerne un procédé d'identification d'un produit métallurgique, selon lequel on effectue, dans un premier temps, un marquage sur une surface du produit et on effectue ensuite la lecture de cette surface marquée.

Il est de pratique courante d'identifier des produits métallurgiques, tels que les rails pour chemin de fer, pour pouvoir les classer en fonction de certains critères (comme la nuance, la date de laminage, la qualité, etc.) permettant, par exemple, de rebuter les articles défectueux et d'élaborer pour les autres des fiches signalétiques destinées à les accompagner auprès de la clientèle.

La technique générale consiste à opérer en deux temps marquage préalable du rail à la sortie du laminoir, et reconnaissance ultérieure du rail par lecture de la marque.

Actuellement, on utilise industriellement deux méthodes qui présentent chacune des inconvénients. Selon une première méthode, on effectue le marquage à la peinture à chaud ; ce qui est coûteux, tant en consommation de matière que par suite de l'utilisation d'une marqueuse spéciale. Puis on opère une lecture directe à distance par le pontier ; ce qui est source d'erreurs.

Selon la deuxième méthode on effectue un marquage, généralement codé, en relief par poinçonnage de segments - ou "barres" - et on opère une lecture "à vue" à proximité par un inspecteur qui commande à un pontier ; cela est non exempt de risques d'erreurs et mobilise simultanément plusieurs personnes.

Le but de l'invention est de proposer un procédé d'identification peu coûteux et sans risque d'erreurs, par lecture automatique à distance et sans contact d'un marquage en relief.

Ce but est atteint, conformément à l'invention grâce à une technique de triangulation optique qui consiste en ce qu'on effectue ladite lecture a) en émettant un plan lumineux dont l'intersection avec la surface marquée du produit se matérialise par une trace lumineuse croisant les reliefs de marquage, b) et en visant la zone marquée par des moyens sensibles à la lumière constitutive du plan lumineux et dont l'axe optique est en dehors dudit plan, de manière à pouvoir observer les décrochements de la trace lumineuse sur les reliefs de marquage et permettre ainsi la lecture de celui-ci.

Dans une forme de mise en oeuvre le plan lumineux est constitué par le balayage d'un rayon laser.

Avantageusement le plan lumineux présente, sur la surface marquée, un angle d'incidence de 45° environ.

Avantageusement, l'axe optique des moyens photosensibles est sensiblement orthogonal au plan lumineux de manière à mettre en évidence un effet de décrochement maximal de la trace lumineuse ainsi qu'une définition constante de l'image de celle-ci sur les moyens photosensibles.

L'invention concerne également un dispositif pour la mise en oeuvre du procédé de l'invention. Ce dispositif comprend des moyens lumineux pour émettre un plan lumineux dont l'intersection avec la surface marquée du produit se matérialise par une trace lumineuse croisant les reliefs de marquage et des moyens optiques sensibles à la lumière constitutive du plan lumineux et dont l'axe optique est en dehors dudit plan de manière à pouvoir mettre en évidence les décrochements de la trace lumineuse sur les reliefs de marquage.

D'autres avantages et caractéristiques de l'invention ressortiront de la description d'un mode particulier de réalisation, faite en référence à la planche unique de dessin annexée sur laquelle :

- la figure 1 représente schématiquement l'ensemble du dispositif de l'invention ;

- la figure 2 juxtapose la vue de la trace du plan lumineux sur la zone de marquage d'un rail, et la vue de l'image de cette trace formée sur les moyens photosensibles placés au foyer image de l'optique de lecture ;

- la figure 3 représente un élément de marquage formé par un caractère alphanumérique du type "affichage digital" avec les trois traces des plans lumineux servant à sa lecture.

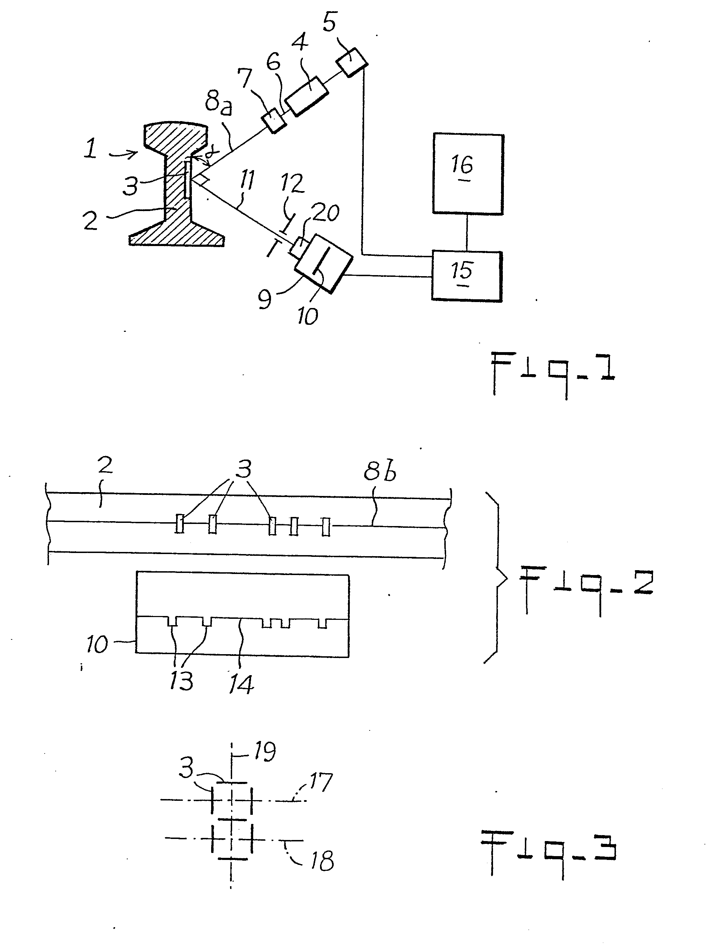

On voit sur la figure 1 un rail 1 chemin de fer, dont l'âme 2 présente une face plane sur laquelle on a effectué un marquage en relief. Dans l'exemple représenté, il s'agit de reliefs en creux réalisés sous forme de segments, ou barres, 3 parallèles (voir aussi figure 2) et disposés côte à côte dans la direction longitudinale du rail, selon un nombre et des écartements variables d'un rail à l'autre. L'ensemble forme un message codé, identifiant le rail qui le porte, et qu'il s'agit de lire.

A cet effet, un émetteur à rayon laser 4, alimenté par un dispositif de commande et d'alimentation 5, émet un rayon laser 6 qu'un dispositif 7, statique ou dynamique (par exemple miroir tournant) transforme en plan lumineux 8a perpendiculaire au plan de la figure 1.

Ce plan lumineux forme sur la surface de l'âme 2 une trace lumineuse 8b (fig. 2) qui croise les reliefs de marquage 3 sensiblement à angle droit.

Le plan lumineux est dirigé de façon à croiser la région centrale de l'âme 2, les reliefs 3 étant suffisamment étendus (par exemple 1 cm de longueur et 1 mm de profondeur) de façon à toujours être coupés par le plan lumineux même si le rail est légèrement décalé en raison d'un guidage imparfait, ou oscille en hauteur autour d'une position moyenne lors du défilement.

La zone marquée est lue au moyen d'une caméra 9 comprenant une matrice 10 de photodiodes associée à une optique 20. Pour un rendement et une définition optimale, la matrice 10 est placée dans le plan image de l'optique 20, et disposée parallèlement au plan lumineux 8a. Son axe optique 11 passe approximativement par le centre moyen des marques 3. En outre, le plan lumineux est avantageusement incliné à 45° par rapport à la surface de l'âme 2 du rail (angle d'incidence $\alpha$ sur la figure 1).

Un masque 12 peut éventuellement servir à limiter le champ de vision de la caméra à la zone probable des marques 3.

La caméra 9 permet donc d'enregistrer les décrochements 13 de la ligne continue 14 qui correspond, dans le plan image de l'optique 20 à la trace 8b du plan lumineux sur la surface de l'âme 2 du rail, chaque décrochement 13 correspondant à un relief 3, comme on le voit sur la figure 2.

De préférence l'axe optique 11 est orienté perpendiculairement au plan de balayage 8a. Ainsi, le système de triangulation permet de lire ce marquage même si le rail est déplacé latéralement par rapport à son guidage prévu : la ligne 14 (et ses décrochements 13) se déplace alors vers le haut ou vers le bas, mais la netteté de l'image n'en est pas affectée.

La caméra 9 (qui pourrait également être une caméra vidéo) est associée à des moyens d'analyse et de traitement 15, qui, à partir des données constituées par les décrochements 13 de la ligne 14, restituent le marquage et le visualisent sur un dispositif de visualisation 16. Le cas échéant, le marquage 3 étant généralement codé, les moyens de traitement peuvent décoder le marquage pour "l'afficher en clair" directement.

Il va de soi que l'invention ne se limite pas à l'exemple décrit, mais s'étend à de multiples variantes ou équivalents dans la mesure où sont respectées les caractéristiques énoncées dans les revendications jointes.

En particulier, le système de l'invention se prête bien à une lecture sur produit en mouvement : il suffit de disposer un obturateur ,

4

par exemple sur le rayon incident 6, commandé de manière à émettre des plans lumineux successifs espacés d'un intervalle de temps synchronisé sur la vitesse de défilement du produit (technique dite "par impulsions") et éventuellement d'effectuer un traitement au signal reçu pour corriger les recouvrements d'images entre les éclairements successifs pour éviter les phénomènes de redondance d'un même relief apparaissant sur deux images consécutives.

Par ailleurs, l'invention trouve une application préférentielle pour la lecture d'identification en caractères alphanumériques, notamment dans le système des sept segments classiques. Comme le montre la figure 3, il suffit de trois plans lumineux de traces 17, 18, 19 pour croiser tous les segments. A noter qu'une seule caméra peut suffire pour lire les décrochements sur les traces parallèles 17 et 18 ; deux caméras en tout et trois sources lumineuses permettent donc la lecture de tout caractère alphanumérique.

## REVENDICATIONS

1) Procédé d'identification d'un produit métallurgique, tel qu'un rail, selon lequel on effectue, dans un premier temps, un marquage en relief sur une surface du produit, et on effectue, dans un deuxième temps, une lecture sans contact du marquage, caractérisé en ce qu'on effectue ladite lecture

- a) en émettant un plan lumineux (8a) dont l'intersection avec la surface marquée du produit se matérialise par une trace lumineuse (8b) croisant les reliefs de marquage (3),

- b) et en visant la zone marquée par des moyens optiques (9) sensibles à la lumière constitutive du plan lumineux et dont l'axe optique (11) est en dehors dudit plan, de manière à pouvoir mettre en évidence les décrochements de la trace lumineuse (8b) sur les reliefs de marquage (3) et permettre ainsi la lecture de celui-ci.

2) Procédé selon la revendication 1, caractérisé en ce que le plan lumineux (8a) est constitué par le balayage d'un rayon laser (6).

3) Procédé selon l'une quelconque des revendications 1 ou 2, caractérisé en ce que le marquage comprend au moins une combinaison de segments (3) transversaux à une droite commune (8b).

4) Procédé selon l'une quelconque des revendications 1 à 3 caractérisé en ce que le plan lumineux présente un angle d'incidence ($\alpha$) sur la surface marquée voisin de 45°.

5) Procédé selon l'une quelconque des revendications 1 à 4, caractérisé en ce que l'axe optique (11) des moyens optiques est sensiblement orthogonal au plan lumineux (8a).

6) Procédé selon l'une quelconque des revendications 1 à 5, caractérisé en ce qu'on fait défiler le produit métallurgique (1) et on procède à la lecture du marquage sous éclairage par émission de plans lumineux successifs décalés dans le temps.

7) Dispositif d'identification d'un produit métallurgique, tel qu'un rail, ce produit comportant sur une surface un marquage en relief, caractérisé en ce qu'il comprend des moyens lumineux (4) pour émettre un plan lumineux dont l'intersection avec la surface marquée (2) du produit (1) se matérialise par une trace lumineuse (8b) croisant les reliefs de marquage (3) et des moyens optiques (9) sensibles à la lumière constitutive du plan lumineux et dont l'axe optique (11) est en dehors dudit plan de manière à pouvoir mettre en évidence les décrochements de la trace lumineuse (8b) sur les reliefs de marquage.

8) Dispositif selon la revendication 7, caractérisé en ce que les moyens optiques comprennent une caméra (9) constituée d'une matrice de photodiodes (10).

Fig-1

Fig-2

Fig-3